(19) Europäisches Patentamt

European Patent Office

Office européen des brevets

(11) **EP 0 645 338 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int. Cl.$^6$: **B66B 5/00**, B66B 1/30, H02J 3/32, B66B 5/02

(21) Anmeldenummer: **94890150.9**

(22) Anmeldetag: **20.09.1994**

(54) **Einrichtung zur Verringerung des notwendigen externen Stromanschlusswertes für Aufzugsanlagen**

Device for reducing gauge of the necessary external power connection in elevator plants

Dispositif pour réduire le calibre de la connexion électrique externe nécessaire des installations d'ascenseurs

(84) Benannte Vertragsstaaten:
**DE FR GB IT NL**

(30) Priorität: **24.09.1993 AT 1934/93**

(43) Veröffentlichungstag der Anmeldung:
**29.03.1995 Patentblatt 1995/13**

(73) Patentinhaber:
**WITRONIC ELEKTRONISCHE GERÄTE GESELLSCHAFT M.B.H.
A-1220 Wien (AT)**

(72) Erfinder: **Spitzer, Martin
A-2253 Weikendorf (AT)**

(74) Vertreter:
**Collin, Hans, Dipl.-Ing. Dr. et al
Mariahilferstrasse 50
1070 Wien (AT)**

(56) Entgegenhaltungen:
**EP-A- 0 505 082          US-A- 4 483 419**

**Beschreibung**

Die Erfindung bezieht sich auf eine Einrichtung zur Verringerung des notwendigen externen Stromanschlußwertes für Aufzugsanlagen, wobei der zum Betrieb des Aufzugsmotors benötigte Strom aus zwei Stromquellen gespeist wird.

Aufzüge werden normalerweise mittels Elektromotoren angetrieben. Es sind zwei große Gruppen von Aufzugsantrieben bekannt. Dies sind einerseits die sogenannten Seilaufzüge, bei welchen der Fahrkorb an einem Seil hängt und der Motor direkt oder mittels eines Getriebes über eine Treibscheibe den Fahrkorb bewegt, und andererseits die hydraulischen Aufzüge, bei welchen der Motor eine Pumpe treibt, welche Öl in einen Zylinder pumpt, wodurch direkt durch den Zylinderstempel oder indirekt ebenfalls durch einen Zylinderstempel und eine zugeordnete Seilverbindung der Fahrkorb bewegt wird.

Allen diesen Arten von Aufzügen ist gemeinsam, daß der elektrische Antriebsmotor nur intermittierend in Betrieb gesetzt wird. Das Verhältnis zwischen den einzelnen Bewegungen des Motors (bzw. des Fahrkorbes) und den Pausen ist vor allem abhängig vom Verwendungszweck des Aufzuges, aber auch von der Art des Antriebes, der Tageszeit und anderen aufzugsspezifischen Eigenschaften.

Bei hydraulischen Aufzügen wird der Pumpenmotor nur bei der Aufwärtsbewegung eingeschaltet, wodurch sich gegenüber einem Seilaufzug mit gleicher Fahrtenanzahl eine nur halb solange Einschaltdauer ergibt.

Der elektrische Anschlußwert des Aufzuges wird immer nach dem maximalen Strombedarf während des meist kurzzeitigen Betriebes berechnet und danach die Gebühren festgesetzt. Weil nun bei Aufzügen praktisch immer ein Betriebs- zu Pausenverhältnis besteht, bei welchem die Pausenzeiten die Betriebszeiten überwiegen, ist es möglich, diesen Umstand auszunützen und eine Einrichtung zu schaffen, welche dieses Verhältnis ausnützt und in den Pausenzeiten Energie speichert und diese dann während der Betriebszeit an den Motor abgibt.

Dadurch kann der externe Anschlußwert des Aufzuges entsprechend stark reduziert werden. Ein verringerter Anschlußwert verringert für den Betreiber des Aufzuges die Anschluß- und Betriebskosten. Dies deswegen, weil die Elektroversorgungsunternehmen auf Basis des Anschlußwertes die Kosten berechnen. Sie müssen ja die entsprechenden Energie-Kapazitäten zur Verfügung stellen, deren Größe bestimmend ist für den notwendigen Aufwand, wie zum Beispiel die Zuleitungsquerschnitte und die Bemessung von Transformatoren u.s.w.

Zusätzlich geschieht es häufig, daß durch den hohen Strombedarf beim Motoranlauf Spannungsschwankungen entstehen, welche negative Auswirkungen auf die Kontinuität der Helligkeit von elektrischen Lampen und auf andere elektrische und elektronische Geräte haben können. Es sind nun Einrichtungen bekannt, welche während des Motoranlaufes einen hohen Spitzenstrom verhindern sollen, indem die Motor-Spannung nicht sofort in voller Höhe angelegt wird. Solche Einrichtungen sind beispielsweise die Stern-Dreieck-Schaltung, welche die Spannung stufenweise an den Motor bringen oder aber stufenlos wirkende elektronische Spannungs-und Frequenzsteuerungen.

Mit solchen Einrichtungen ist es beispielsweise möglich, einen durchschnittlichen Stromspitzenwert, gemessen über eine Zeitspanne von 20 msec., vom 10fachen Nennstrom $I_n$ auf einen Wert von ca. 2fachen $I_n$ zu reduzieren, indem die Zeit des Motoranlaufes entsprechend verlängert wird und dadurch der durchschnittliche Anlaufspitzenwert über eine längere Zeitspanne anliegt und dadurch nicht so große Spitzenwerte erreicht.

Die GB-PS 2 139 831 offenbart eine Einrichtung, bei der eine über eine Wechselstromquelle und nachfolgende Gleichrichterschaltung aufgeladene Batterie als ausschließliche Energiequelle für einen Wechselstrom-Aufzugsmotor benützt wird. Die von der Batterie bereitgestellte konstante Gleichspannung wird in eine Dreiphasen-Wechselspannung umgewandelt und dem Motor zugeführt.

Die DE-OS 37 43 660 beschreibt eine ähnliche Einrichtung, bei der die Speisung aus dem Netz und von einem, zu einem Zwischenkreiskondensator parallel geschalteten, Akkumulator erfolgt, wobei die gesamte Schaltung einen Frequenzumsetzer konventioneller Bauart darstellt.

Der vorliegenden Erfindung liegt nun die Aufgabe zugrunde, durch eine geeignete Einrichtung eine Reduzierung des zur Bewegung des Fahrkorbes notwendigen Stromes, nicht nur unter den motorabhängigen Anlaufspitzenwert, womit bereits die oben angeführten Netzstörungen verhindert wären, sondern signifikant unter den Wert des Motornennstromes zu erreichen.

Dies wird bei der eingangs näher bezeichneten Einrichtung erfindungsgemäß dadurch erreicht, daß die Ströme aus beiden Stromquellen in einer stromsummenbildenden Einrichtung zusammengeführt und addiert werden, wobei einerseits ein konstanter und vorher definierter maximaler Strom aus dem allgemeinen Stromnetz entnommen wird und der zusätzlich zum Hochlauf und zum Betrieb mit Nenndrehzahl benötigte Strom einer Energiespeichereinrichtung entnommen wird, die von einem Ladegerät aufgeladen wird, das die primäre Energie dem allgemeinen Stromnetz entnimmt, und den Ladevorgang dahingehend optimiert, daß bei vermehrter Notwendigkeit zur Versorgung des Motors ein Schnellademodus Platz greift, wohingegen zu Zeiten geringer Verwendung lediglich ein Erhaltungslademodus verwendet wird, und zusätzlich in einer elektronischen Steuereinrichtung der Ladezustand der Energiespeichereinrichtung fortwährend kontrolliert wird, so daß ein Motoranlauf nur dann zugelassen wird, wenn sichergestellt ist, daß genügend Energie für die gesamte Fahrtdauer vorhanden ist. Dabei kann in weiterer Ausgestaltung vorgesehen sein, daß die dem Stromnetz entnommene elektrische Energie zuerst in einer Gleichrichterschaltung gleichgerichtet und anschließend in einem Wandler auf einen bestimmten Gleichspannungspegel gebracht wird und daß gleichzeitig der maximale Strom in einer Strombegrenzungseinrichtung unabhängig von der Stromaufnahme des Motors auf einen bestimmten einstellbaren Wert beschränkbar ist.

Gemäß der vorliegenden Erfindung wird somit dem allgemeinen Stromnetz auch in den Betriebspausen des Motors Energie entnommen. Diese Energie wird gespeichert und bei Bedarf, das heißt, wenn der Motor in Betrieb gesetzt wird, zusätzlich zur Energie, die in begrenztem Maße direkt aus dem Stromnetz entnommen wird, an den Motor abgegeben.

Erfindungsgemäß wird somit vorgeschlagen, eine entsprechende Einrichtung zwischen den Netzanschluß und den Antrieb einzubinden, welche dem Motor die notwendige Spitzenenergie zuführt, andererseits aber dem Netz nur eine bestimmte und vorher definierbare maximale Energie entnimmt. Selbstverständlich wird der gesamte Energieverbrauch der Aufzugsanlage durch die erfindungsgemäße Einrichtung nicht reduziert, sondern nur der Wert des Spitzenstromes bzw. der externe Stromanschlußwert.

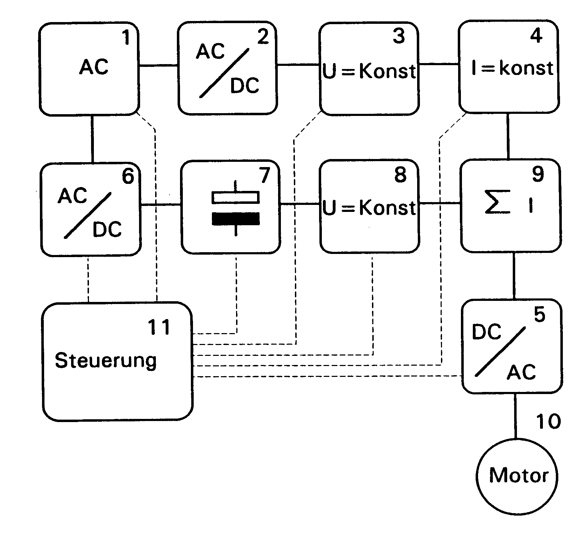

Die Erfindung wird nun unter Bezugnahme auf die Zeichnung anhand der einzigen Figur 1 beispielsweise beschrieben.

Die erfindungsgemäße Einrichtung besteht aus einem Gleichrichter 2, mit welchem der dem allgemeinen Netz 1 entnommene Wechselstrom gleichgerichtet wird. Es ist dabei unerheblich, ob es sich um ein Dreiphasen- Drehstromnetz handelt, in welchem Falle der Gleichrichter in Form einer Drehstrom-Brückenschaltung ausgeführt sein muß, oder lediglich um einen Einphasen-Stromanschluß, für dessen Gleichrichtung lediglich ein einfacher Brückengleichrichter benötigt wird. Abhängig vom Einsatzfall kann es notwendig sein, vor der Gleichrichterschaltung ein Netzfilter einzufügen. Ein solches Filter hat jedoch auf die Funktion der erfindungsgemäßen Einrichtung keinen Einfluß. Die Bemessung des Gleichrichters erfolgt in der Art, daß der benötigte maximale Strom sicher gleichgerichtet werden kann. Eine Bemessung nach der Größe des Motornennstromes ist nicht notwendig.

Nach dem Gleichrichter wird der pulsierende Gleichstrom nun in einem Wandler 3 auf einen bestimmten Spannungspegel eingestellt und zugleich in einer darauffolgenden Strombegrenzerschaltung 4, welche als Zerhackerschaltung in Form eines Hochsetzstellers ausgeführt sein kann, auf einen maximalen Strom begrenzt. Das heißt, daß am Ausgang des Strombegrenzers 4 unabhängig vom Abschlußwiderstand oder der Belastung, definitionsgemäß daher auch im Kurzschlußfall ein bestimmter definierter maximaler Strom fließen kann.

Dieser Strom wird nun in einer stromsummenbildenden Einrichtung 9 mit dem Strom aus der Energiespeichereinrichtung 7 zusammengeführt und addiert. Im darauffolgenden Leistungsteil 5 wird der Gleichstrom in einem Inverter zu einem Dreiphasen-Drehstrom umgewandelt. Der Inverter besteht üblicherweise aus einem elektronischen Steuerteil und den zugehörigen Leistungsschaltgliedern.

Um einen möglichst guten Wirkungsgrad zu erhalten ist es vorteilhaft, mittels einer Pulsdauermodulation den Drehstrom ähnlich einer Sinuswelle zu generieren. Entsprechende Schaltungen sind bereits Stand der Technik. Der Drehstrom wird dann nur mehr dem Motor 10 zugeführt, wobei es anwendungsspezifisch notwenig sein kann, Entstörfilter zwischenzuschalten. Auch die Verwendung eines abgeschirmten Kabels kann sich als notwendig erweisen. Wenn es für die Applikation notwendig ist, können zur Drehrichtungsumkehr auch Wendeschützen zwischen dem Leistungsteil 5 und dem Motor 10 zwischengeschaltet werden.

Der Leistungsteil 5 ist zweckmäßig so ausgeführt, daß damit ein Drehstrom zum Betrieb des Motors mit unterschiedlichen Frequenzen erzeugbar ist, wodurch vor allem beim Hochlaufen des Motors durch das Stellen der Drehstromfrequenz ein überhöhter Anlaufstrom vermeidbar ist.

Die Energiespeichereinrichtung 7 wird von einem Ladegerät 6 aufgeladen, wobei das Ladegerät 6 die primäre Energie dem allgemeinen Stromnetz 1 entnimmt, und den Ladevorgang dahingehend optimiert, daß bei vermehrter Notwendigkeit zur Versorgung des Motors ein Schnellademodus Platz greift, wohingegen zu Zeiten geringer Verwendung lediglich ein Erhaltungslademodus verwendet wird, und zusätzlich in einer elektronischen Steuereinrichtung 11 der Ladezustand der Energiespeichereinrichtung 7 fortwährend kontrolliert wird, sodaß ein Motoranlauf nur dann zugelassen wird, wenn sichergestellt ist, daß genügend Energie für die gesamte Fahrtdauer vorhanden ist.

Während der Motor 10 in Betrieb ist, wird von der elektronischen Steuereinrichtung 11 eine Optimierung des Kosinus Phi errechnet, wobei im Leistungsteil 5 die Motorspannung unter Beobachtung des Motorstromes mittels einer Pulsweitenmodulation soweit abgesenkt wird, bis der Blindleistungsanteil ein Minimum erreicht.

Weiters wird die Spannung der elektrischen Energie, welche der Energiespeichereinrichtung 7 entnommen wird, in einem Wandler 8 auf dasselbe Potential angehoben wie die Spannung am Ausgang des Strombegrenzers 4 und der Gleichstrom, welcher der stromsummenbildenden Einrichtung 9 zum Betrieb des Motors entnommen wird, in einem Leistungsteil 5 zu einem Drehstrom umgewandelt und dann dem Motor 10 zugeführt.

**Patentansprüche**

1. Einrichtung zur Verringerung des notwendigen externen Stromanschlußwertes für Aufzugsanlagen, wobei der zum Betrieb des Aufzugsmotors benötigte Strom aus zwei Stromquellen gespeist wird, dadurch gekennzeichnet, daß die Ströme aus beiden Stromquellen in einer stromsummenbildenden Einrichtung (9) zusammengeführt und addiert werden, wobei einerseits ein konstanter und vorher definierter maximaler Strom aus dem allgemeinen Stromnetz (1) entnommen wird und der zusätzlich zum Hochlauf und zum Betrieb mit Nenndrehzahl benötigte Strom einer Energiespeichereinrichtung (7) entnommen wird, die von einem Ladegerät (6) aufgeladen wird, das die primäre Energie dem allgemeinen Stromnetz (1) entnimmt, und den Ladevorgang dahingehend optimiert, daß bei vermehrter Notwendigkeit zur Versorgung des Motors ein Schnellademodus Platz greift, wohingegen zu Zeiten geringer Verwendung lediglich ein Erhaltungslademodus verwendet wird, und zusätzlich in einer elektronischen Steuereinrichtung (11) der Ladezustand der Energiespeichereinrichtung (7) fortwährend kontrolliert wird, so daß ein Motoranlauf nur dann zugelassen wird, wenn sichergestellt ist, daß genügend Energie für die gesamte Fahrtdauer vorhanden ist.

2. Einrichtung nach Anspruch 1, dadurch gekennzeichnet, daß die dem Stromnetz (1) entnommene elektrische Energie zuerst in einer Gleichrichterschaltung (2) gleichgerichtet und anschließend in einem Wandler (3) auf einen bestimmten Gleichspannungspegel gebracht wird und daß gleichzeitig der maximale Strom in einer Strombegrenzungseinrichtung (4) unabhängig von der Stromaufnahme des Motors (10) auf einen bestimmten einstellbaren Wert beschränkbar ist.

3. Einrichtung nach Anspruch 1 oder 2, dadurch gekennzeichnet, daß während der Motor (10) in Betrieb ist, in einer elektronischen Steuereinrichtung (11) eine Optimierung des Kosinus Phi errechnet wird, wobei im Leistungsteil (5) die Motorspannung unter Beobachtung des Motorstromes mittels einer Pulsweitenmodulation soweit abgesenkt wird, bis der Blindleistungsanteil ein Minimum erreicht.

4. Einrichtung nach einem der Ansprüche 1 bis 3, dadurch gekennzeichnet, daß die Spannung der elektrischen Energie, welche der Energiespeichereinrichtung (7) entnommen wird, in einem Wandler (8) auf dasselbe Potential angehoben wird wie die Spannung am Ausgang des Strombegrenzers (4) und daß der Gleichstrom, welcher der stromsummenbildenden Einrichtung (9) zum Betrieb des Motors entnommen wird, in einem Leistungsteil (5) zu einem Drehstrom umgewandelt und dann dem Motor (10) zugeführt wird.

5. Einrichtung nach einem der Ansprüche 1 bis 4, dadurch gekennzeichnet, daß der Leistungsteil (5) zur Erzeugung von Drehstrom variabler Frequenz zum Betrieb des Motors ausgeführt ist.

**Claims**

1. A device for reducing the necessary nominal value of external power supply for elevator installations, the power required for operating the elevator motor being supplied by two power supplies, characterized in that the currents from both power supplies are brought together and summed up in a current summing device (9), a constant and previously defined maximum current being drawn from the mains supply (1), on the one hand, and the additional current required for run-up and operation at nominal speed being drawn from an energy storage device (7) charged by a charging set (6) drawing its primary energy from the mains supply, and optimizes the process of charging to the effect that in case of increased necessity for supplying the motor a quick-charging mode comes into effect, while at times of low usage, only a float charge mode is used, and additionally the charging state of the energy storage device (7) is continuously checked in an electronic control device, so that starting of the motor is only permitted if sufficient energy supply for the total duration of elevator operation is guaranteed.

2. The device according to claim 1, characterized in that the electrical power drawn from the mains supply (1) is first rectified in a rectifier circuit (2) and subsequently brought to a certain d.c. voltage in a converter (3), and that at the same time the maximum current may be restricted to a certain adjustable value in a current limiting device (4) independently of the current consumption of the motor (10).

3. The device according to any of claims 1 or 2, characterized in that optimisation of cos $\varphi$ is calculated in an electronic control device (11) while the motor (10) is in operation, the motor voltage being lowered in the power component (5) by means of pulse-width modulation to such an extent that the reactive power reaches a minimum while monitoring the motor current.

4. The device according to any of claims 1 to 3, characterized in that in a converter (8) the voltage of electrical energy drawn from the energy storage device (7) is increased to the same potential as the output voltage of the current limiter (4) and in that the direct current drawn from the current summing device (9) for operating the motor is converted into rotary current in a power component (5) and then supplied to the motor (10).

5. The device according to any of claims 1 to 4, characterized in that the power component (5) for generating rotary current of variable frequency is adapted to operating the motor.

## Revendications

1. Dispositif pour la réduction du valeur nominal nécessaire de connexion électrique externe pour installations d'ascenseur, le courant nécessaire pour le fonctionnement du moteur de l'ascenseur venant de deux sources de courant, caractérisé en ce que les courants venant des deux sources de courant sont réunis et additionnés dans un dispositif de sommation de courants (9), un courant maximum constant et prédéfini étant d'une part prélevé du réseau général (1) et le courant additionnellement nécessaire pour l'accélération et pour l'opération à vitesse nominale étant prélevé d'un dispositif d'accumulation d'énergie (7) chargé par un dispositif de chargement (6) prélevant l'énergie primaire du réseau général, et optimise le (processus de) chargement de sorte qu'un mode de chargement à grande vitesse prenne pied en cas de nécessité accrue d'alimentation du moteur, pendant que seulement un mode de chargement de maintien est employé en temps d'utilisation faible, et additionnellement l'état de chargement du dispositif d'accumulation d'énergie (7) est continuellement contrôlé dans un organe de contrôle électronique (11) afin d'admettre la mise en marche du moteur seulement au cas où il serait assuré qu'il y a assez d'énergie pour toute la durée de transport.

2. Le dispositif selon la revendication 1, caractérisé en ce que l'énergie électrique prélevé du réseau (1) est d'abord redressée dans un montage de redresseur (2) et par la suite menée à une certaine tension continue dans un transducteur (3) et en ce qu'en même temps le courant maximum peut être limité à une certaine valeur adjustable dans un limiteur de courant (4) indépendamment de la consommation de courant du moteur (10).

3. Le dispositif selon la revendication 1 ou 2, caractérisé en ce qu'une optimisation du facteur de puissance (cos $\varphi$) est calculée dans un organe de commande électronique (11) pendant l'opération du moteur, la tension du moteur étant abaissée dans l'élément de puissance (5) au moyen d'une modulation d'impulsions en largeur en observant le courant du moteur jusqu'à ce que la puissance réactive atteint un minimum.

4. Le dispositif selon l'une des revendications 1 à 3, caractérisé en ce que la tension de l'énergie électrique prélevée du dispositif d'accumulation d'énergie (7) est élevée au même potentiel dans un transducteur (8) que la tension à la sortie du limiteur de courant (4) et en ce que le courant continu prélevé du dispositif de sommation de courants (9) pour l'opération du moteur est transformé en un courant triphasé dans un élément de puissance (5) et par la suite alimenté au moteur (10).

5. Le dispositif selon l'une des revendications 1 à 4, caractérisé en ce que l'élément de puissance (5) est adapté à la génération de courant triphasé de fréquence variable pour l'opération du moteur.

EP 0 645 338 B1

**1** AC

**2** AC / DC

**3** U = Konst

**4** I = konst

**6** AC / DC

**7**

**8** U = Konst

**9** $\sum$ I

**11** Steuerung

**5** DC / AC

**10** Motor